# EUROPEAN PATENT APPLICATION

(11) **EP 3 280 205 A1**
(43) Date of publication of application: **07.02.2018**
(21) Application number: 16773111.6
(22) Date of filing: 31.03.2016
(51) Int. Cl.: H04W 72/04

(54) **USER TERMINAL, WIRELESS BASE STATION, AND WIRELESS COMMUNICATION METHOD**

(30) Priority: 02.04.2015 JP 2015076144
(71) Applicant: NTT DOCOMO, INC., Chiyoda-ku Tokyo 100-6150 (JP)
(72) Inventor: TAKEDA, Kazuki, Tokyo 100-6150 (JP); UCHINO, Tooru, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2016/060650
(87) International publication number: WO 2016/159231

(57) **Abstract**

The present invention is designed so that UL transmission can be carried out adequately even when communication is carried out by using a plurality of CCs of varying communication qualities. A user terminal communicates with a radio base station by using a first CC and a second CC, and has a generating section that generates uplink control information based on DL signals transmitted from the radio base station, a transmission section that transmits uplink control information, and a control section that controls the transmission of the uplink control information, wherein, when transmission of an uplink shared channel is indicated in the first CC, the control section controls the transmission of the uplink control information by using the uplink shared channel of the first CC, and, when transmission of an uplink shared channel is indicated in the second CC and the transmission of the uplink shared channel is not indicated in the first CC, the control section controls the transmission of the uplink control information by using an uplink control channel of the first CC.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Successor system of LTEreferred to as "LTE-advanced" (also referred to as "LTE-A") -- have been under study for the purpose of achieving further broadbandization and increased speed beyond LTE, and the specifications thereof have been drafted as LTE Rel. 10 to 12.

The system band in LTE Rel. 10 to 12 includes at least one component carrier (CC), where the LTE system band constitutes one unit. Such bundling of a plurality of CCs into a wide band is referred to as "carrier aggregation" (CA). Also, in LTE Rel. 12 supports dual connectivity (DC), in which a user terminal communicates by using CCs that are controlled separately by different radio base stations (schedulers).

The specifications of LTE up to Rel. 12 have been drafted assuming exclusive operations in frequency bands that are licensed to operatorsthat is, licensed bands. As licensed bands, for example, 800 MHz, 2 GHz and/or 1.7 GHz are used. Furthermore, for future radio communication systems (Rel. 13 and later versions), a system ("LTE-U" (LTE Unlicensed)) to run LTE systems not only in frequency bands licensed to communications providers (operators) (licensed bands), but also in frequency bands where license is not required (unlicensed bands), is under study.

In particular, a system (LAA: Licensed-Assisted Access) to run an unlicensed band assuming the presence of a licensed band is also under study. Note that systems that run LTE/LTE-A in unlicensed bands may be collectively referred to as "LAA." A licensed band is a band in which a specific provider is allowed exclusive use, and an unlicensed band is a band which is not limited to a specific provider, and in which radio stations can be provided.

An unlicensed band may be run without even synchronization, coordination and/or cooperation between different operators and/or non-operators, and there is a threat that significant cross-interference is produced in comparison to a licensed band. Consequently, when an LTE/LTE-A system (LTE-U) is run in an unlicensed band, it is desirable if the LTE/LTE-A system is run taking into account the cross-interference with other systems that run in unlicensed bands such as Wi-Fi (registered trademark), other operators' LTE-U, and so on. In order to prevent cross-interference in unlicensed bands, a study is in progress to allow an LTE-U base station/user terminal to perform "listening" before transmitting signals and limit transmission depending on the result of listening.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"

### Summary of Invention

### Technical Problem

In CA of Rel. 10 to 12, uplink control information (UCI) to be transmitted from a user terminal is transmitted in an uplink control channel (PUCCH). Also, when the PUCCH and the PUSCH have to be transmitted at the same time while simultaneous transmission of an uplink control channel and an uplink shared channel (PUSCH) are not configured, the user terminal multiplexes (piggyback) and transmits all the uplink control information upon the PUSCH. In this way, by transmitting uplink control information in the PUSCH ("UCI on PUSCH"), the user terminal achieves single-carrier performance in UL signal transmission.

In Rel. 13 and later versions, CA and/or the like may be executed by using CCs that use licensed bands (licensed band CCs) and CCs that use unlicensed bands (unlicensed band CCs). In this case, if the transmission of uplink control information (UCI) is controlled as in existing systems (Rel. 12 and earlier versions), cases then might occur where uplink control information (UCI) is transmitted in unlicensed band CCs.

When a user terminal makes UL transmission in an unlicensed band, cases might occur where UL transmission is limited depending on the result of listening and so on in order to reduce the cross-interference with other systems, other operators and/or the like. Also, in comparison with licensed bands, unlicensed bands are more likely to produce unwanted interference and lower the quality of communication. As a result of this, a user terminal may be unable to feed back uplink control information such as HARQ-ACKs adequately, and has to suffer damaged communication quality.

The present invention has been made in view of the above, and it is therefore an object of the present invention to provide a user terminal, a radio base station and a radio communication method that allow adequate UL transmission even when communication is carried out by using a plurality of CCs of varying communication qualities.

### Solution to Problem

The user terminal of the present invention communicates with a radio base station by using a first CC and a second CC, and has a generating section that generates uplink control information based on DL signals transmitted from the radio base station, a transmission section that transmits uplink control information, and a control section that controls the transmission of the uplink control information, and, in this user terminal, when transmission of an uplink shared channel is indicated in the first CC, the control section controls the transmission of the uplink control information by using the uplink shared channel of the first CC, and, when transmission of an uplink shared channel is indicated in the second CC and the transmission of the uplink shared channel is not indicated in the first CC, the control section controls the transmission of the uplink control information by using an uplink control channel of the first CC.

### Advantageous Effects of Invention

According to the present invention, it is possible to allow adequate UL transmission even when communication is carried out by using a plurality of CCs of varying communication qualities.

### Brief Description of Drawings

FIGs. 1 provide diagrams to show examples of methods of assigning uplink control information in Rel. 12 and earlier;
FIGs. 2 provide diagrams to show examples of simultaneous PUCCH-PUSCH transmission;
FIG. 3 is a diagram to explain LBT;
FIG. 4 is a diagram to show UCI on PUSCH using unlicensed bands;
FIGs. 5 provide diagrams to show examples of transmission methods in which simultaneous PUCCH-PUSCH transmission is configured;
FIGs. 6 provide diagrams to show examples of uplink control information transmission methods according to the first example;
FIGs. 7 provide diagrams to show examples of uplink control information transmission methods according to a second example;
FIGs. 8 provide diagrams to show examples of uplink control information transmission methods according to a fourth example;
FIG. 9 is a schematic diagram to show an example of a radio communication system according to the present embodiment;
FIG. 10 is a diagram to explain an overall structure of a radio base station according to the present embodiment;
FIG. 11 is a diagram to explain a functional structure of a radio base station according to the present embodiment;
FIG. 12 is a diagram to explain an overall structure of a user terminal according to the present embodiment; and
FIG. 13 is a diagram to explain a functional structure of a user terminal according to the present embodiment.

### Description of Embodiments

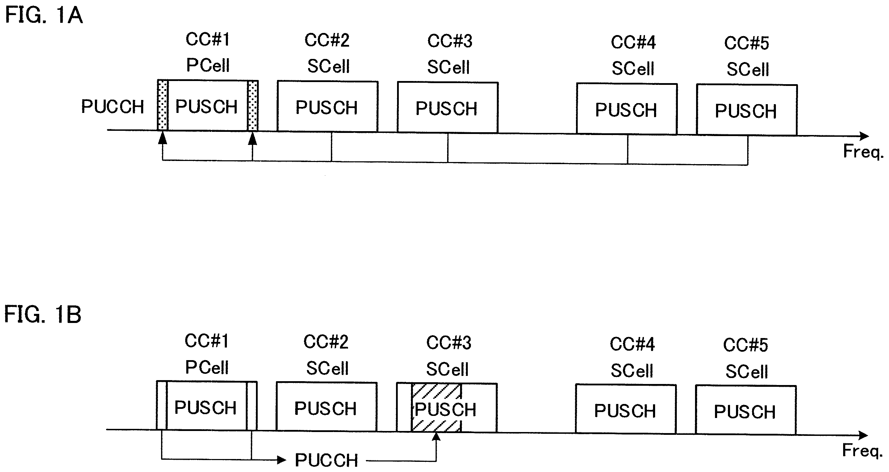

FIGs. 1 provide diagrams to show examples of uplink control information (UCI) transmission methods according to Rel. 10 to 12. FIG. 1A shows a UCI multiplexing method that is for use when there is no uplink data transmission command (PUSCH transmission), and FIG. 1B shows a UCI multiplexing method that is for use when there is an uplink data transmission command. Also, in FIGs. 1 present examples cases where five CCs (one PCell and four SCells) are configured, and where simultaneous transmission of a PUCCH and a PUSCH is not configured.

FIG. 1A shows a case where, in a given subframe, PUSCH transmission is not carried out in CC #1 to CC #5. In this case, a user terminal multiplexes and transmits each CC's uplink control information on the PUCCH of a predetermined CC (here, CC #1).

FIG. 1B shows a case where there is uplink data (PUSCH transmission) to transmit to a radio base station in CC #3 (SCell) of a given subframe. In this case, a user terminal multiplexes (piggyback) and transmits uplink control information (the uplink control information that should be transmitted in the PUCCH of CC #1) on the PUSCH of CC #3.

In this way, when simultaneous transmission of a PUCCH and a PUSCH is not configured, given that a user terminal does not transmit a PUCCH when there is a PUSCH to transmit, it is possible to maintain single carrier transmission. Note that a structure may be employed here in which, when PUSCH transmission takes place in multiple CCs, a PUCCH is allocated to a predetermined CC (the primary cell, secondary cell of with the minimum cell index, etc.).

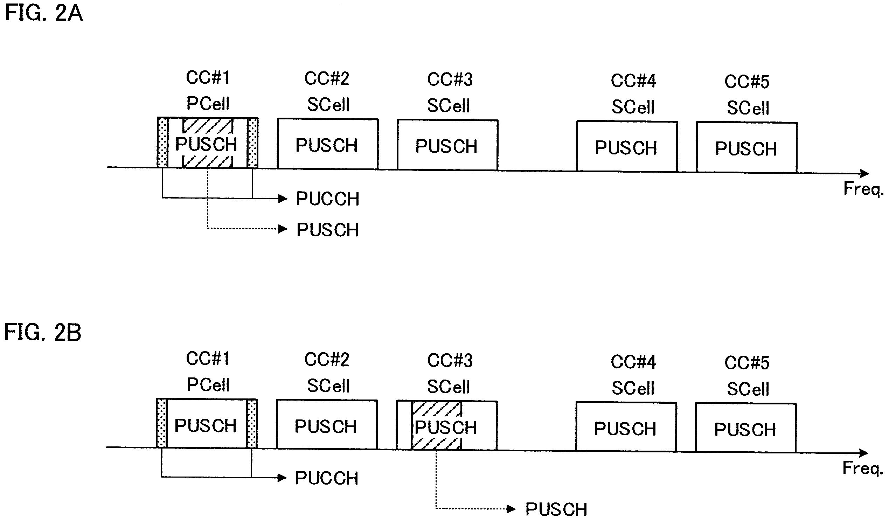

Also, in CA of Rel. 10 to 12, simultaneous transmission of a PUCCH and a PUSCH (simultaneous PUCCH-PUSCH transmission) is supported. FIGs. 2 show an example of an uplink control information transmission method for use when simultaneous PUCCH-PUSCH transmission is configured.

When simultaneous PUCCH-PUSCH transmission is configured, uplink control information is transmitted by using the PUCCH alone, or by using part of the PUCCH and part of the PUSCH. Simultaneous PUCCH-PUSCH transmission has two patterns -- namely, simultaneous PUCCH-PUSCH transmission within a CC and simultaneous PUCCH-PUSCH transmission across CCs.

FIG. 2A shows a case where, when simultaneous PUCCH-PUSCH transmission within a CC is configured, a user terminal simultaneously allocates (multiplexes) a PUCCH and a PUSCH to one CC (here, the primary cell). When PUSCH transmission does not take place in a given subframe, a user terminal transmits uplink control information using the PUCCH. On the other hand, when PUSCH transmission takes place in a given subframe in a predetermined CC, the user terminal transmits the PUCCH and the PUSCH.

When the uplink control information to transmit is one of a delivery acknowledgement signal (HARQ-ACK)/scheduling request (SR) and periodic channel state information (P-CSI), the user terminal transmit the uplink control information using the PUCCH. On the other hand, if the uplink control information to transmit includes an HARQ-ACK/SR and P-CSI, the user terminal transmits the HARQ-ACK/SR in the PUCCH, and transmits the P-CSI in the PUSCH (UCI on PUSCH).

FIG. 2B shows a case where, when simultaneous PUCCH-PUSCH transmission across CCs is configured, a user terminal simultaneously allocates a PUCCH and a PUSCH to different CCs. Here, a case is shown where the PUCCH is allocated to the primary cell (CC #1) and the PUSCH is allocated to a secondary cell (CC #3). When, in a given subframe, PUSCH transmission does not take place in any CC, a user terminal transmits uplink control information using the PUCCH. On the other hand, when PUSCH transmission takes place in a CC in a given subframe, the user terminal transmits the PUCCH and the PUSCH.

When the uplink control information to transmit is one of an HARQ-ACK/SR and P-CSI, the user terminal transmit the uplink control information using the PUCCH. On the other hand, if the uplink control information to transmit includes an HARQ-ACK/SR and P-CSI, the user terminal transmits the HARQ-ACK/SR in the PUCCH, and transmits the P-CSI in the PUSCH (UCI on PUSCH).

Furthermore, for more advanced successor systems of LTE (for example, Rel. 13 and later versions), systems to run LTE systems not only in frequency bands licensed to communications providers (operators) (licensed bands), but also in frequency bands where license is not required (unlicensed bands), are under study.

The premise of existing LTE/LTE-A is that it is run in licensed bands, and therefore each operator is allocated a different frequency band. However, unlike a licensed band, an unlicensed band is not limited to use by a specific provider. When run in an unlicensed band, LTE may be carried out without even synchronization, coordination and/or cooperation between different operators and/or non-operators. In this case, a plurality of operators and/or systems share and use the same frequency in the unlicensed band, and therefore there is a threat of producing cross-interference.

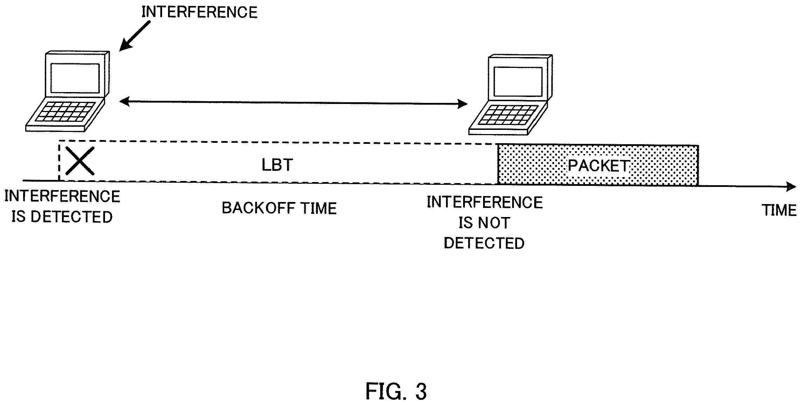

In Wi-Fi systems that are run in unlicensed bands, carrier sense multiple access/collision avoidance (CSMA/CA), which is based on the mechanism of LBT (Listen Before Talk), is employed. To be more specific, for example, a method in which each transmission point (TP), access point (AP), Wi-Fi terminal (STA: Station) and so on perform "listening" (CCA: Clear Channel Assessment) before carrying out transmission, and carries out transmission only when there is no signal beyond a predetermined level, is used. When there is a signal to exceed a predetermined level, a waiting time that is determined on a random basis is given, and, when this is over, listening is performed again (see FIG. 3).

So, for LTE/LTE-A systems that are run in unlicensed bands (for example, LAA), too, a study is in progress to use transmission control based on the result of listening. For example, a radio base station and/or a user terminal perform listening (LBT) before transmitting signals in an unlicensed band cell, and checks whether other systems (for example, Wi-Fi) and/or other operators are communicating. If the result of listening shows that the received signal intensity from other systems and/or other LAA transmission points is equal to or lower than a predetermined value, the radio base station and/or the user terminal judge that the channel is in the idle state (LBT_idle) and transmit signals. On the other hand, if the result of listening shows that the received signal intensity from other systems and/or other LAA transmission points is greater than the predetermined value, the radio base station and/or the user terminal judge that the channel is in the busy state (LBT_busy), and limit signal transmission.

Note that "listening" herein refers to the operation which radio base stations and/or user terminals perform before transmitting signals in order to check/measure whether or not signals to exceed a predetermined level (for example, predetermined power) are being transmitted from other transmission points. Also, this "listening" performed by radio base stations and/or user terminals may be referred to as "LBT" (Listen Before Talk), "CCA" (Clear Channel Assessment), and so on. As to how to limit signal transmission based on the result of LBT, possible methods include making a transition to another carrier by way of DFS (Dynamic Frequency Selection), applying transmission power control (TPC), holding (stopping) signal transmission, and so on.

In this way, by using LBT in communication in LTE/LTE-A (for example, LAA) systems that are run in unlicensed bands, it becomes possible to reduce the interference with other systems and/or the like.

Meanwhile, even when interference in unlicensed bands is controlled by applying LBT, there is a possibility that interference cannot be controlled at a sufficient level, in comparison to licensed bands where specific communication providers can control interference. That is, when compared to licensed bands, unlicensed bands are likely to fail to guarantee communication quality and to heighten the error rate of signal transmission/receipt.

Generally, data channels for downlink data (PDSCH), uplink data (PUSCH) and so on adopt HARQ control, and the quality control is implemented to achieve error rates around 10%. By contrast, HARQ control cannot be applied to downlink control information and uplink control information (HARQ-ACKs and so on), and the deterioration of throughput is likely to have a significant impact on transmission failures, and therefore the quality control is implemented to achieve error rates around 0.1% to 1%.

Consequently, it is possible to secure the quality of control signals. To do so, for example, in LAA in which communication (for example, CA) is carried out by using licensed bands and unlicensed bands, it is possible to configure a licensed band CC as the primary cell (PCell) and apply cross-carrier scheduling to the unlicensed band CCs. By this means, it is possible to transmit the PDCCH, the PUCCH and so on in licensed band CCs, and secure the quality of control signals.

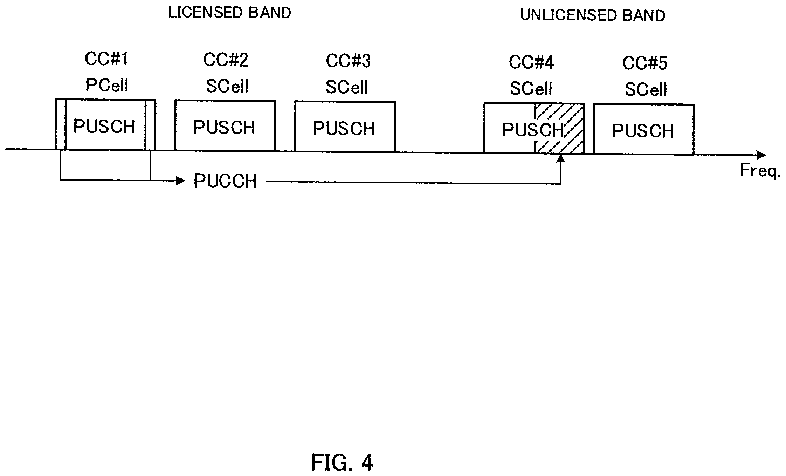

However, when the transmission rules of existing systems (Rel. 12 and earlier versions) are applied to LAA in which an uplink CC (UL- CC) is configured in an unlicensed band, cases might occur where uplink control information (UCI) is transmitted in the unlicensed band CC. For example, when there is no PUSCH transmission command in a licensed band CC and a PUSCH transmission command is present in an unlicensed band CC, a user terminal has to transmit uplink control information by using the PUSCH of the unlicensed band CC (UCI on PUSCH) (see FIG. 4). Note that FIG. 4 shows a case where CC #1 to CC #3 to use a licensed band and CC #4 and CC #5 use an unlicensed band.

So, presuming the case where CA is executed by using first CCs and second CCs of varying channel qualities, the present inventors have come up with the idea of controlling the transmission of uplink control information (in particular, HARQ-ACKs, SRs, etc.) without using the second CCs that have relatively low channel quality, the first CCs and the second CCs, having varying channel qualities, may be, for example, a combination of licensed band CCs and unlicensed band CCs. In this case, a user terminal controls transmission so that uplink control information (in particular, HARQ-ACKs, SRs, etc.) is not multiplexed (piggyback) on the PUSCHs of the unlicensed band CC (second CC). Note that the combination of first CCs and second CCs is by no means limited to licensed band CCs and unlicensed band CCs.

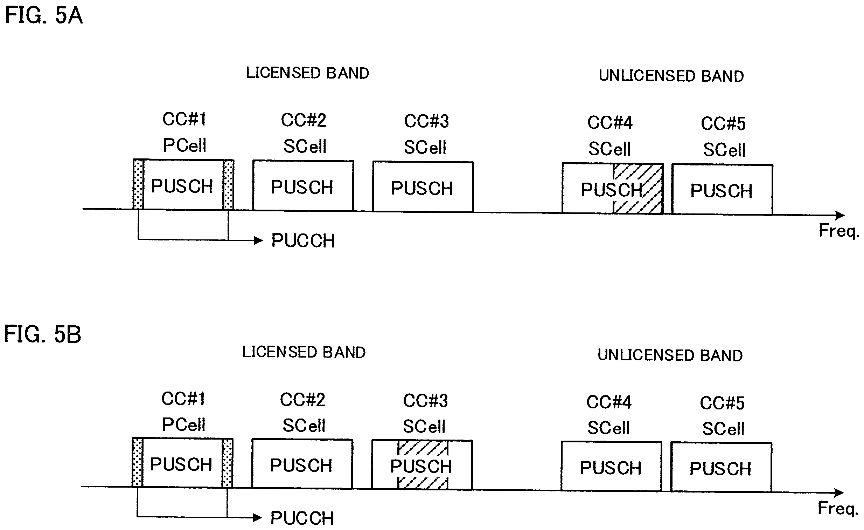

First, the present inventors have worked on configuring simultaneous PUCCH-PUSCH transmission as a method of not to multiplex uplink control information on licensed band CCs. In this case, even when a user terminal transmits a PUSCH in an unlicensed band CC, the user terminal can at least transmit HARQ-ACKs/SRs using a PUCCH of a licensed band CC (for example, the PCell) (see FIG. 5A). By this means, it is possible to avoid transmitting important UCI (HARQ-ACKs/SRs) in an unlicensed band CC.

However, when simultaneous PUCCH-PUSCH transmission is configured, a user terminal transmits a PUCCH and a PUSCH simultaneously even when PUSCH transmission is configured in a licensed band CC. For example, as shown in FIG. 5B, when PUSCH transmission is indicated (commanded) in a licensed band CC, a user terminal transmits a PUCCH (here, CC #1) and a PUSCH (here, CC #3) simultaneously. When simultaneous PUCCH-PUSCH transmission is employed and/or when UCI is distributed over multiple CCs, the situation where the transmission power of a PUCCH and/or a PUSCH exceeds the maximum transmission power (power limited) is more likely to occur. This has a threat of reducing the coverage of a user terminal.

The present inventors have come up with the idea of controlling the transmission of uplink control information so that uplink control information (in particular, HARQ-ACKs, SRs, etc.) is not multiplexed on the PUSCHs of unlicensed band CCs (second CCs), and, furthermore, in licensed band CCs (first CCs), uplink control information is transmitted using a predetermined CC's channel. That is, when a PUSCH is configured in a licensed band CC, uplink control information is transmitted using this PUSCH, and, when a PUSCH is configured in an unlicensed band CC, uplink control information is transmitted using a PUCCH of a licensed band CC.

To be more specific, according to the present embodiment, in the case where UCI is multiplexed on a PUSCH of an unlicensed band CC, the UCI is transmitted using a PUCCH of a licensed band CC by applying simultaneous PUCCH-PUSCH transmission, and, in the case UCI is multiplexed on a PUSCH of a licensed band CC, UCI on PUSCH is applied.

Alternatively, in the case UCI is multiplexed on a PUSCH of an unlicensed band CC, this PUSCH is not transmitted (dropped), and the UCI is transmitted using a PUCCH of a licensed band CC, and, in the case UCI is multiplexed on a PUSCH of a licensed band CC, UCI on PUSCH is applied.

Now, the present embodiment will be described in detail below with reference to the accompanying drawings. Note that, although cases will be shown in the following description in which the number of CCs is five, the present embodiment is by no means limited to this. The present embodiment is applicable to cases where the number of CCs is four or less or to cases where the number of CCs is six or more. Also, licensed band CCs may refer to CCs where listening is not employed, and unlicensed band CCs may refer to CCs where listening (for example, LBT) is employed.

### (First Example)

A case of control will be described with a first example where simultaneous PUCCH-PUSCH transmission is employed when a PUSCH is configured only in an unlicensed band CC, and where, when a PUSCH is configured in a licensed band CC, uplink control information is transmitted using this PUSCH.

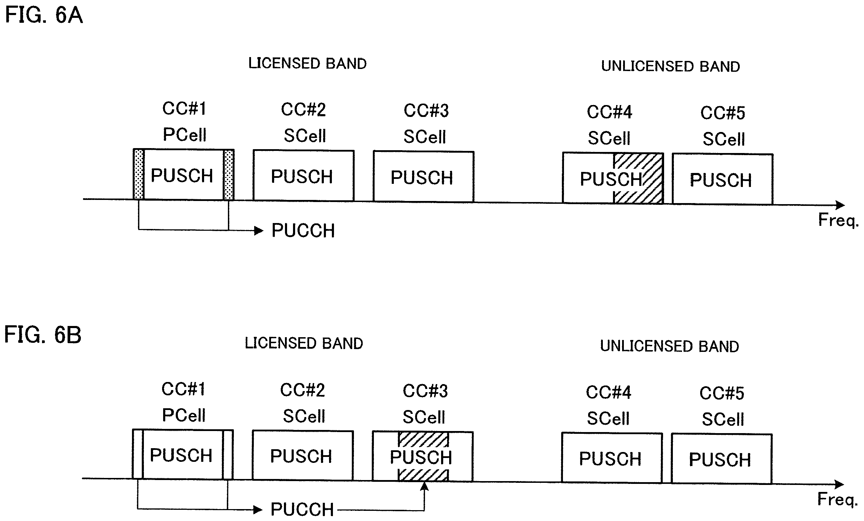

FIG. 6A shows an example uplink control information transmission method for use when PUSCH transmission is not indicated (commanded) in a licensed band and PUSCH transmission is indicated in an unlicensed band. Note that FIGs. 6 show cases where three licensed band CCs and two unlicensed band CCs are configured in a user terminal. Information about the CCs to configure in the user terminal can be reported from a radio base station to the user terminal through higher layer signaling (for example, RRC signaling and so on).

As shown in FIG. 6A, when PUSCH transmission is produced in an unlicensed band CC alone (here, CC #4), the user terminal transmits uplink control information by using a predetermined licensed band CC (here, CC #1). To be more specific, the user terminal employs simultaneous PUCCH-PUSCH transmission, and transmits uplink control information, which at least includes an HARQ-ACK, by using the PUCCH of licensed band of CC #1. Note that uplink control information in the unlicensed band can also be transmitted using a PUCCH of a licensed band CC.

The user terminal transmits UL data by using an unlicensed band CC (here, CC #4). Also, when there are a HARQ-ACK/SR and P-CSI as uplink control information, it is possible to allocate the HARQ-ACK/SR to the PUCCH of CC #1 and allocate the P-CSI to the PUSCH of CC #4 and transmit these.

FIG. 6B shows an example uplink control information transmission method for use when PUSCH transmission is indicated in a licensed band CC. As shown in FIG. 6B, when PUSCH transmission is produced in at least one CC (here, CC #3) among licensed band CCs, the user terminal transmits uplink control information by using the licensed band CC's PUSCH (UCI on PUSCH). That is, the user terminal exerts control to transmit uplink control information in a PUSCH, and not to transmit a PUCCH (simultaneous PUCCH-PUSCH transmission is not applied).

By controlling the transmission of uplink control information as shown in FIG. 6, the user terminal can avoid the situation where UCI (in particular, HARQ-ACKs, SRs, etc.) is transmitted in unlicensed band CCs, and prevent the transmission quality of this UCI from lowering. Also, since UCI on PUSCH is applied to licensed band CCs, the user terminal can use single-carrier transmission when transmitting uplink control information in a PUSCH. As a result of this, compared to cases where multi-carrier transmission is required, it is possible to prevent the situation where the PUSCH transmission power exceeds the maximum transmission power and is limited (power limited).

### (Second Example)

A case of control will be described with a second example where, when a PUSCH is configured only in an unlicensed band, this PUSCH is not transmitted (dropped), and where, when a PUSCH is configured in a licensed band CC, uplink control information is transmitted using this PUSCH.

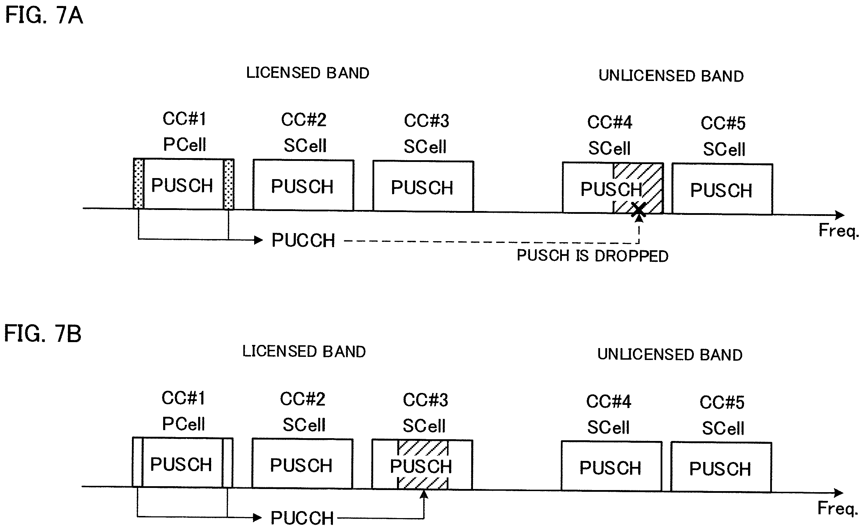

FIG. 7A shows an example uplink control information transmission method for use when PUSCH transmission is not indicated in a licensed band and PUSCH transmission is indicated in an unlicensed band. Note that FIGs. 7 show cases where three licensed band CCs and two unlicensed band CCs are configured in a user terminal. Information about the CCs to configure in the user terminal can be reported from a radio base station to the user terminal through higher layer signaling (for example, RRC signaling and so on).

As shown in FIG. 7A, when PUSCH transmission is produced in an unlicensed band CC alone (here, CC #4), the user terminal transmits uplink control information by using a predetermined licensed band CC (here, CC #1). To be more specific, the user terminal does not transmit (drops) the PUSCH of the unlicensed band CC (here, CC #4), and transmits uplink control information, which at least includes an HARQ-ACK, by using the PUCCH of licensed band CC #1. Note that uplink control information in the unlicensed band can also be transmitted using a PUCCH of a licensed band CC.

When there are a HARQ-ACK/SR and P-CSI as uplink control information, it is possible to allocate the HARQ-ACK/SR to the PUCCH of CC #1 and drop the P-CSI.

FIG. 7B shows an example uplink control information transmission method for use when PUSCH transmission is indicated in a licensed band CC. As shown in FIG. 7B, when PUSCH transmission is produced in at least one CC (here, CC #3) among licensed band CCs, the user terminal transmits uplink control information by using the licensed band CC's PUSCH (UCI on PUSCH). That is, the user terminal exerts control to transmit uplink control information in a PUSCH, and not to transmit a PUCCH (simultaneous PUCCH-PUSCH transmission is not applied).

By controlling the transmission of uplink control information as shown in FIG. 6, the user terminal can avoid the situation where UCI (in particular, HARQ-ACKs, SRs, etc.) is transmitted in unlicensed band CCs, and prevent the transmission quality of this UCI from lowering. Also, since UCI on PUSCH is applied to licensed band CCs, the user terminal can use single-carrier transmission when transmitting uplink control information in a PUSCH. As a result of this, compared to cases where multi-carrier transmission is required, it is possible to prevent the situation where the PUSCH transmission power exceeds the maximum transmission power and is limited (power limited).

Also, the second example is applicable to user terminals that are not capable of using simultaneous PUCCH-PUSCH transmission. For example, a user terminal may report whether or not to employ simultaneous PUCCH-PUSCH transmission (across CCs) to a radio base station as capability information (capability signaling).

Also, a user terminal that is capable of using simultaneous PUCCH-PUSCH transmission may employ the first example, and a user terminal that is incapable of using simultaneous PUCCH-PUSCH transmission may employ the second example. For example, a user terminal that is capable of using simultaneous PUCCH-PUSCH transmission across CCs can perform uplink control information transmission operations assuming that the first example is employed. Also, a radio base station can control uplink control information receiving operations based on the capability information reported from each user terminal.

### (Steps of Operation)

Now, an example of the steps of operation between a user terminal and a radio base station according to the present embodiment will be described below.

First, a user terminal reports capability information (capability signaling) as to whether or not CA is possible between licensed band CCs and unlicensed band CCs, to a radio base station. In this case, the user terminal may also report whether or not simultaneous PUCCH-PUSCH transmission is possible (first example).

The radio base station configures CA (DL CA and UL CA) that uses licensed band CCs and unlicensed band CCs, in the user terminal, depending the quality of communication, traffic and so on.

When PUSCH transmission is not indicated in any of the CCs, the user terminal transmits uplink control information by using the PUCCH of a predetermined cell (for example, the PCell). By contrast, when there is PUSCH transmission in a given CC, the user terminal controls the transmission of uplink control information depending on the type of the CC where the PUSCH transmission takes place (licensed band CC/unlicensed band CC).

### <Example of operation with first example>

A user terminal that can use simultaneous PUCCH-PUSCH transmission (across CCs) transmits uplink control information, by employing UCI on PUSCH or simultaneous PUCCH-PUSCH transmission, following predetermined rules. The predetermined rules which the user terminal follows vary between when PUSCH transmission takes place in licensed band CCs and when PUSCH transmission does not take place in licensed band CCs but takes place in unlicensed band CCs.

When a PUSCH is not transmitted in a licensed band CC and a PUSCH is transmitted in an unlicensed band CC, the user terminal employs simultaneous PUCCH-PUSCH transmission (see FIG. 6A). Also, when one of a HARQ-ACK/SR and P-CSI is included in uplink control information, the user terminal transmits the uplink control information in a PUCCH. When both a HARQ-ACK/SR and P-CSI are included in uplink control information, the user terminal transmits part of the uplink control information (HARQ-ACK/SR) in a PUCCH. Also, the user terminal transmits the rest of the uplink control information (P-CSI) in the PUSCH of a predetermined unlicensed band CC. When PUSCHs are transmitted in a plurality of unlicensed band CCs, for example, it is possible to multiplex uplink control information on the PUSCH of the SCell having the lowest SCell index.

When PUSCH transmission takes place in a licensed band CC, the user terminal multiplexes (piggyback) and transmits uplink control information on the PUSCH of one licensed band CC (see FIG. 6B). In this case, if a PUSCH is transmitted in the PCell, uplink control information is multiplexed on the PCell's PUSCH. When no PUSCH is transmitted in the PCell and PUSCHs are transmitted in a plurality of SCells, for example, it is possible to multiplex uplink control information on the PUSCH of the SCell having the smallest SCell index.

### <Example of operation with second example>

A user terminal that cannot use simultaneous PUCCH-PUSCH transmission (across CCs) transmits uplink control information, by employing UCI on PUSCH or simultaneous PUCCH-PUSCH transmission, following predetermined rules. The predetermined rules which the user terminal follows vary between when PUSCH transmission takes place in licensed band CCs and when PUSCH transmission does not take place in licensed band CCs but takes place in unlicensed band CCs.

When a PUSCH is not transmitted in a licensed band CC and a PUSCH is transmitted in an unlicensed band CC, the user terminal drops the unlicensed band CC's PUSCH, and transmits uplink control information in the PUCCH of the PCell (see FIG. 7A).

When PUSCH transmission takes place in a licensed band CC, the user terminal multiplexes (piggyback) and transmits uplink control information on the PUSCH of one licensed band CC (see FIG. 7B). In this case, if a PUSCH is transmitted in the PCell, uplink control information is multiplexed on the PCell's PUSCH. When no PUSCH is transmitted in the PCell and PUSCHs are transmitted in a plurality of SCells, for example, it is possible to multiplex uplink control information on the PUSCH of the SCell having the smallest SCell index.

### (Third Example)

Referring back to the first example, which method of simultaneous PUCCH-PUSCH transmission (FIG. 6A) and UCI on PUSCH (FIG. 6B) a user terminal uses can be judged based on whether the CC to perform UL transmission is a licensed band CC or an unlicensed band CC. Similarly, referring back to the second example, which method of dropping a PUSCH and transmitting a PUCCH (FIG. 7A), and UCI on PUSCH (FIG. 7B) a user terminal uses can be judged based on whether the CC to perform UL transmission is a licensed band CC or an unlicensed band CC. However, the present embodiment is by no means limited to the method of making judgments based whether a licensed band is used or an unlicensed band CC is used.

For example, in the first example, information to identify a CC, to which a user terminal should apply simultaneous PUCCH-PUSCH transmission (FIG. 6A) or UCI on PUSCH (FIG. 6B), may be reported in advance to the user terminal through higher layer signaling. The information to include in higher layer signaling may be, for example, an indicator to specify a frequency band. Alternatively, this may be information that relates to CCs (TCCs: Tertiary CCs) that implement different control than SCells of existing systems.

A CC (TCC) to implement different control than SCells of existing systems may be identified when, for example, (1) the value of SCellIndex, which represents an SCell's CC index, is 5 or greater (in existing systems, the maximum value of SCellIndex is 4), (2) the value of ServCellIndex, which represents an CC index, is 5 or greater (in existing systems, the maximum value of ServCellIndex is 4), and (3) an index (for example, TCellIndex) that is different from SCellIndex stipulated in Rel. 10 is assigned. The first example may be carried out so as to apply different control between CCs that fulfill any of these conditions and CCs that do not fulfill any, as shown in FIG. 6A 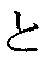 FIG. 6B. With the second example, the same might hold with information that identifies between cells where a user terminal drops the PUSCH and transmits the PUCCH (FIG. 7A) and cells where the user terminal uses UCI on PUSCH (FIG. 7B).

The user terminal can choose the method of transmitting uplink control information (make a choice between FIG. 6A and FIG. 6B and/or between FIG. 7A and FIG. 7B) based on information related to CCs, received via higher layer signaling and so on.

For example, even when PUSCH transmission takes place only in licensed bands, if a macro cell of a relatively low frequency is used as the PCell and a small cell of a relatively high frequency is used as an SCell, cases might occur where quality varies significantly even between licensed band CCs. In such cases, by sending a report to a user terminal to prevent the user terminal from choosing a cell of relatively poor quality (SCell) among licensed band CCs as a UCI-transmitting cell, UL transmission can be carried out more adequately.

By reporting information that relates to predetermined CCs, it is no longer necessary to reserve quality for UCI when communication providers configure small cells that use high frequencies as SCells, so that it is possible to reduce the cost of communication operation (operational cost).

### (Fourth Example)

An uplink control information transmission method for use when a plurality of cell groups, including at least one CC, are configured will be described with a fourth example.

In dual connectivity (DC), in which a user terminal communicates by using CCs that are controlled separately by different radio base stations (schedulers), cell groups are configured. Cell groups to configure in DC may include one master cell group (MCG) and one or a plurality of secondary cell groups (SCGs). The master cell group may be the cell group to include the CC that serves as the PCell.

Also, with CA of Rel. 13 and later versions, a study is in progress to transmit uplink control information not only by using the PUCCH of the PCell, but also by using the PUCCHs of SCells (PUCCH on SCell). To transmit uplink control information by using an SCell's PUCCH, it may be possible to configure a plurality of cell groups, which are each comprised of at least one CC, and determine the transmission timing and/or the PUCCH resource per cell group. A cell group like this may be referred to as a "PUCCH cell group," a "PUCCH CG," or a "PUCCH cell-group." Also, an SCell, having its PUCCH configured in cell groups, may be referred to as a "PUCCH cell," a "PUCCH CC," or a "PUCCH-SCell."

With the fourth example, when DC is configured, the transmission of uplink control information is controlled per cell group (MCG and SCG). For example, a user terminal can apply the uplink control signal transmission method that has been described with the first example and/or the uplink control signal transmission method that has been described with the second example on a per cell group basis.

Also, when a plurality of PUCCH cell groups are configured in CA, the transmission of uplink control information is controlled within each PUCCH cell group. For example, a user terminal can apply the uplink control signal transmission method that has been described with the first example (FIG. 6) and/or the uplink control signal transmission method that has been described with the second example (FIG. 7) on a per PUCCH cell group basis.

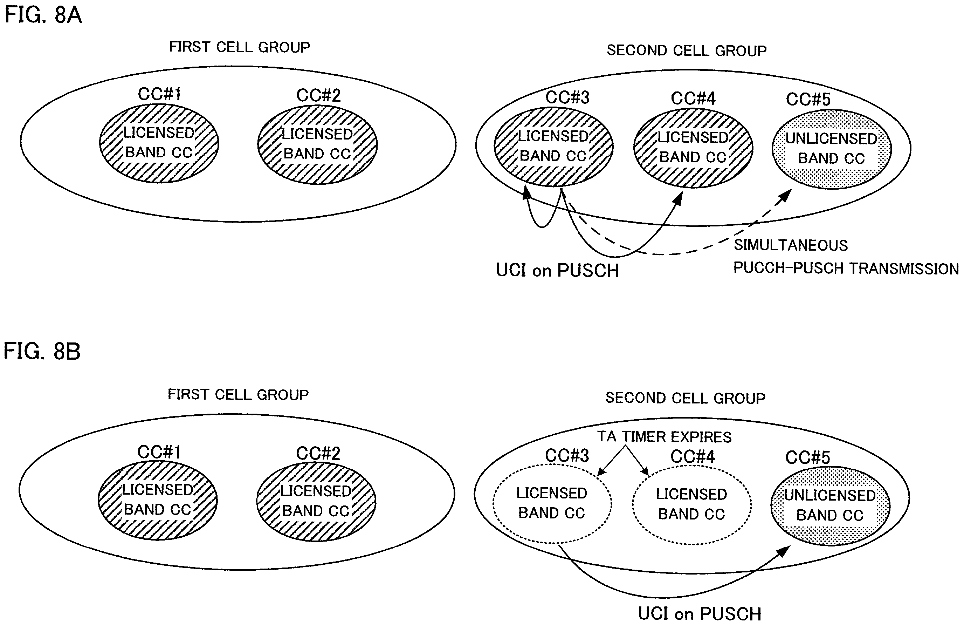

FIG. 8A shows a case where two cell groups are configured in DC or CA in which five CCs are configured. In FIG. 8A, the first cell group is formed with licensed band CC #1 and licensed band CC #2 and the second cell group is formed with licensed band CC #3, licensed band CC #4 and unlicensed band CC #5.

In FIG. 8A, since the second cell group includes licensed band CCs and an unlicensed band CC, a user terminal can exert control not to multiplex uplink control information (in particular, HARQ-ACKs, SRs, etc.) on the PUSCH of the unlicensed band CC, in the second cell group.

For example, if PUSCH transmission is not indicated in any of the CCs in the second cell group, the user terminal transmits uplink control information by using the PUCCH of a predetermined cell. The predetermined cell may be, for example, the PCell or a PSCell in DC, the PCell or a PUCCH-SCell in CA, and so on. Also, when PUSCH transmission is indicated in a licensed band CC, the user terminal transmits uplink control information by using this licensed band CC's PUSCH.

Also, when PUSCH transmission is not indicated in the licensed band CCs and PUSCH transmission is indicated in unlicensed band CC #5, the user terminal transmits uplink control information by using a PUCCH of a licensed band CC. In this case, the user terminal can employ simultaneous PUCCH-PUSCH transmission (first example), or drop the PUSCH transmission in the unlicensed band CC (second example).

In this way, case to employ UCI on PUSCH and cases to employ simultaneous PUCCH-PUSCH transmission (or drop a PUSCH of an unlicensed band CC) can be controlled depending on the CC where PUSCH transmission takes place in each cell group. Note that the user terminal can identify a CC where PUSCH transmission is carried out, based on predetermined rules (for example, based on whether the CCs is a licensed band CC or an unlicensed band CC). Alternatively, the user terminal can judge a CC where PUSCH transmission is carried out, based on CC-related information that is reported from a radio base station.

By controlling the transmission of uplink control information on a cell group basis, it is possible to minimize the reduction of coverage due to transmission of uplink control information across cell groups.

Also, when a plurality of PUCCH cell groups are configured in CA, it may be possible to configure timing advance groups (TAGs) on a per cell group basis. Timing advance (TA) is used to adjust UL transmission timings, and a user terminal controls UL transmission based on TA values. Also, the user terminal stops UL transmission in a CC when the timing advance timer (TA timer) expires.

Also, when CA is employed, a common TA value may be configured in a plurality of CCs, or varying timing advances may be configured (multiple TAs). For example, when a cell group includes a PUCCH-SCell, it is possible to configure a separate TA timer in each CC.

Assume a case here where a separate TA timer is configured for each CC (a licensed band CC and an unlicensed band CC). It might occur here that, in a cell group including a PUCCH-SCell, the TA timer of a CC (for example, a licensed band CC) employing UCI on PUSCH expires, and the TA timer of a CC (for example, an unlicensed band CC), which does not use this TA timer, continues.

In this way, a case might occur where uplink control information is produced in a given cell group, and where, in this cell group, only cells (for example, unlicensed band CCs) that are configured not to employ UCI on PUSCH transmission can make UL transmission. In this case, a user terminal may carry out UCI on PUSCH by using a CC where this UCI on PUSCH transmission is limited (for example, an unlicensed band CC) (see FIG. 8B). That is, when UCI can be transmitted in unlicensed band CCs alone, a structure to transmit UCI in unlicensed band CCs may be used even if the transmission methods of the above first example and the second example are configured.

Also, by transmitting UCI by using unlicensed band CCs under predetermined conditions (UCI on PUSCH), it is possible to control UL transmission flexibly.

### (Structure of Radio Communication System)

Now, the structure of the radio communication system according to an embodiment of the present invention will be described below. In this radio communication system, the radio communication methods according to the embodiment of the present invention are employed. Note that the radio communication methods of the above-described embodiment may be applied individually or may be applied in combination.

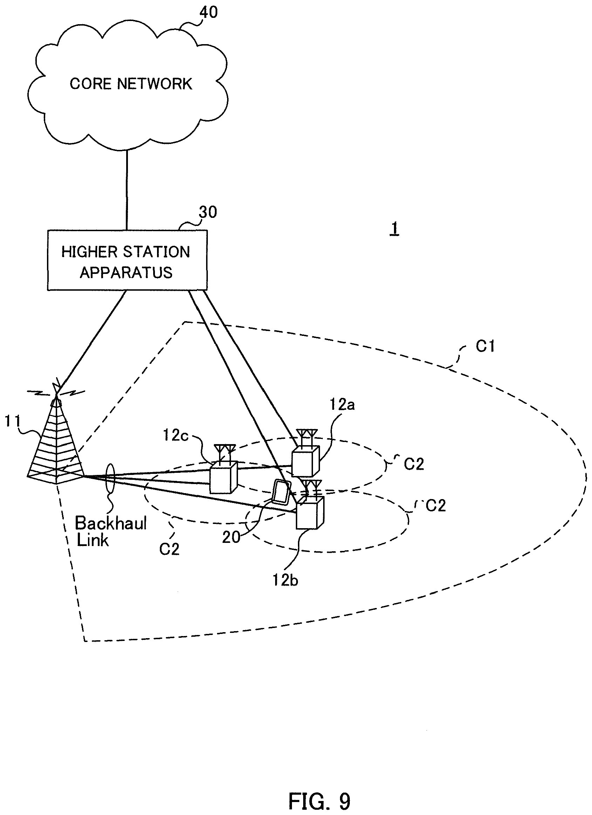

FIG. 9 is a diagram to show an example of a schematic structure of a radio communication system according to an embodiment of the present invention. Note that the radio communication system shown in FIG. 9 is a system to incorporate, for example, an LTE system, super 3G, an LTE-A system and so on. In this radio communication system, carrier aggregation (CA) and/or dual connectivity (DC) to bundle multiple component carriers (CCs) into one can be used. Also, these multiple CCs include licensed band CCs that use licensed bands and unlicensed band CCs that use unlicensed bands. Note that this radio communication system may be referred to as "IMT-Advanced," or may be referred to as "4G," "5G," "FRA" (Future Radio Access) and so on.

The radio communication system 1 shown in FIG. 9 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

### <Radio base station>

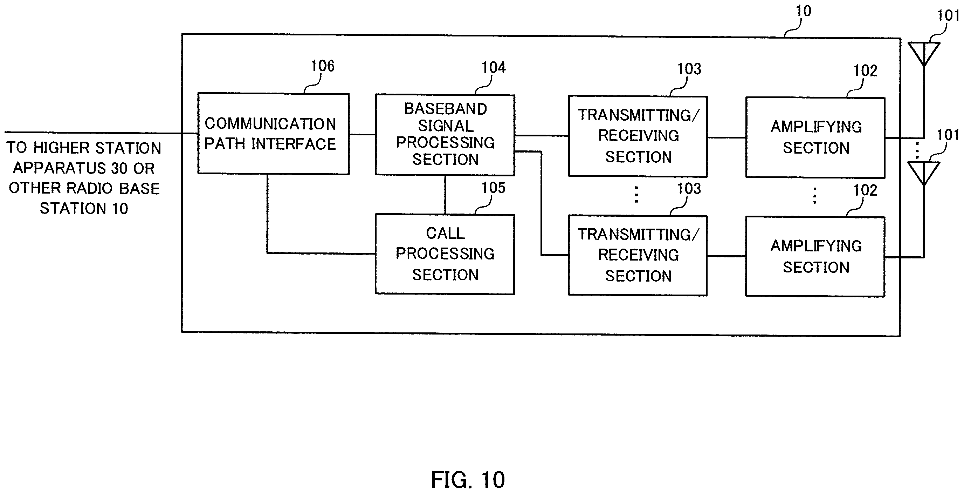

FIG. 10 is a diagram to show an example of an overall structure of a radio base station according to an embodiment of the present invention. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmission sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

For example, the transmitting/receiving sections 103 transmit information about the CCs that execute CA (for example, the number of CCs configured, whether these CCs are licensed band CCs/unlicensed band CCs, and so on), information about the cell groups configured, information related to the CCs to which the uplink control information transmission method is applied, and so on. Also, when PUSCH transmission in a licensed band is indicated, the transmitting/receiving sections 103 can receive UCI using the PUSCH of the licensed band, and, when PUSCH transmission in an unlicensed band is indicated and PUSCH transmission is not indicated in a licensed band, the transmitting/receiving sections 103 can receive UCI by using the licensed band's PUCCH. For the transmitting/receiving sections 103, transmitters/receivers, transmitting/receiving circuits or transmitting/receiving devices that can be described based on common understanding of the technical field to which the present invention pertains can be used.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

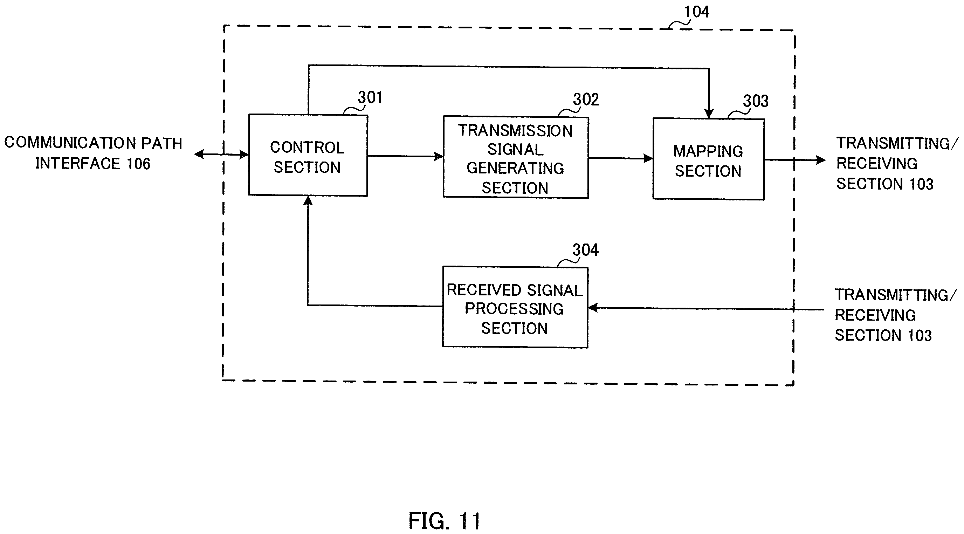

FIG. 11 is a diagram to show an example of a functional structure of a radio base station according to the present embodiment. Note that, although FIG. 11 primarily shows functional blocks that pertain to characteristic parts of the present embodiment, the radio base station 10 has other functional blocks that are necessary for radio communication as well. As shown in FIG. 11, the baseband signal processing section 104 has a control section (scheduler) 301, a transmission signal generating section (generating section) 302, a mapping section 303 and a received signal processing section 304.

The control section (scheduler) 301 controls the scheduling (for example, resource allocation) of downlink data signals that are transmitted in the PDSCH and downlink control signals that are communicated in the PDCCH and/or the EPDCCH. Furthermore, the control section (scheduler) 301 also controls the scheduling of system information, synchronization signals, paging information, CRSs, CSI-RSs and so on.

The control section 301 can control the configurations of CCs, cell groups, simultaneous PUCCH-PUSCH transmission and so on, to apply to the user terminals. Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on. Note that, for the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301.

Also, by using the received signals, the received signal processing section 304 may measure the received power (for example, the RSRP (Reference Signal Received Power)), the received quality (for example, the RSRQ (Reference Signal Received Quality)), channel states and so on, by using the received signals. Note that the measurement results in the received signal processing section 304 may be output to the control section 301. Note that a measurement section to perform the measurement operations may be provided apart from the received signal processing section 304.

The receiving process section 304 can be constituted by a signal processor, a signal processing circuit or a signal processing device, and a measurer, a measurement circuit or a measurement device that can be described based on common understanding of the technical field to which the present invention pertains.

### <User terminal>

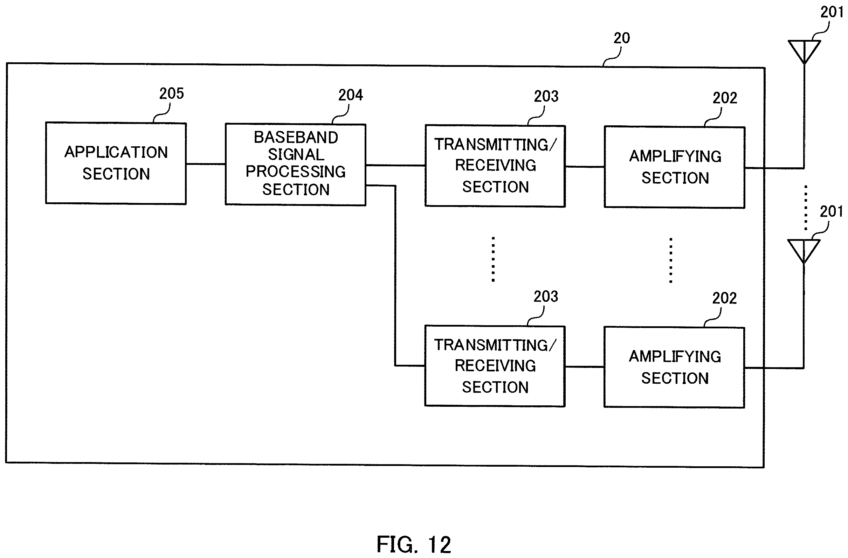

FIG. 12 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmission sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections 203 transmit uplink control information (for example, HARQ-ACKs) that is generated based on DL signals transmitted from the radio base station. The transmitting/receiving sections 203 can also report the user terminal's capability information (capability) to the radio base station. Also, the transmitting/receiving sections 203 can receive information about the CCs that execute CA (for example, the number of CCs configured, whether these CCs are licensed band CCs/unlicensed band CCs, and so on), information about the cell groups configured, information related to the CCs to which the uplink control information transmission method is applied, and so on. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

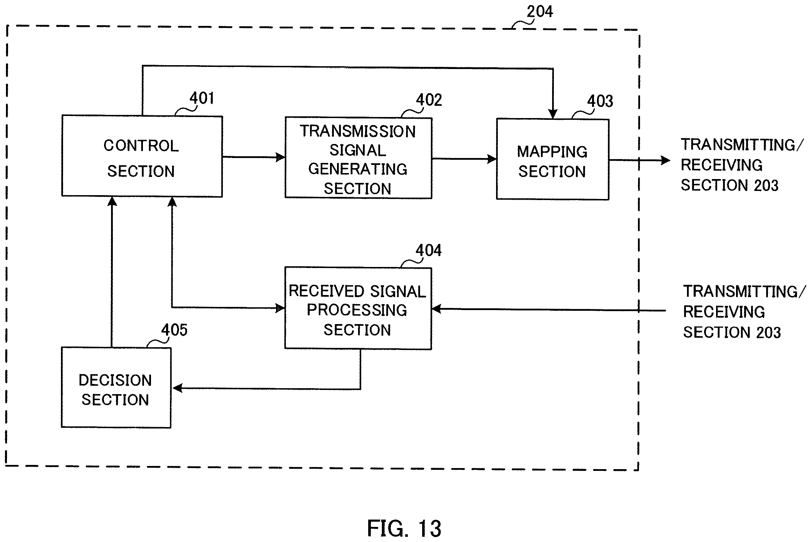

FIG. 13 is a diagram to show an example of a functional structure of a user terminal according to the present embodiment. Note that, although FIG. 13 primarily shows functional blocks that pertain to characteristic parts of the present embodiment, the user terminal 20 has other functional blocks that are necessary for radio communication as well. As shown in FIG. 13, the baseband signal processing section 204 provided in the user terminal 20 has a control section 401, a transmission signal generating section 402, a mapping section 403, a received signal processing section 404 and a decision section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission of uplink control signals (for example, HARQ-ACKs and so on) and uplink data based on downlink control information (UL grants), the result of deciding whether or not retransmission control is necessary for downlink data, and so on.

Also, when PUSCH transmission is indicated in a first CC (licensed band), the control section 401 can control the transmission of UCI by using the PUSCH of the licensed band, and, when PUSCH transmission is indicated in a second CC (unlicensed band) and PUSCH transmission is not indicated in a licensed band, the control section 401 can control the transmission of UCI by using the licensed band's PUCCH.

For example, when PUSCH transmission is indicated in an unlicensed band and PUSCH transmission is not indicated in a licensed band, the control section 401 can control the transmission of UCI by applying simultaneous PUCCH-PUSCH transmission (see FIG. 6A). Alternatively, when PUSCH transmission is indicated in an unlicensed band and PUSCH transmission is not indicated in a licensed band, the control section 401 can drop the PUSCH transmission of the unlicensed band (see FIG. 7A). When PUSCH transmission is indicated in a licensed band, the control section 401 can exert control not to employ simultaneous PUCCH-PUSCH transmission (and employ UCI on PUSCH) (see FIG. 6B and FIG. 7B).

Also, when PUSCH transmission is indicated in a predetermined licensed band CC among a plurality of component carriers (CCs) that use licensed bands, the control section 401 can control PUCCH transmission by using the predetermined licensed band CC's PUSCH.

Also, the control section 401 can control the transmission of UCI for each of a plurality of cell groups, where each cell group includes at least one CC that uses a licensed band and/or an unlicensed band (see FIG. 8A and FIG. 8B).

For the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. Also, the transmission signal generating section 402 generates UL signals from the decisions (ACKs/NACKs) made in the decision section 405. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. The mapping section 403 can be constituted by a mapper, a mapping circuit or a mapping device that can be described based on common understanding of the technical field to which the present invention pertains.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the decision section 405.

Also, by using the receive signals, the received signal processing section 404 may measure the received power (for example, the RSRP (Reference Signal Received Power)), the received quality (RSRQ (Reference Signal Received Quality)), channel states and so on. Note that the measurement results in the received signal processing section 404 may be output to the control section 401. The control section 401 can control LBT upon UL transmission to unlicensed band CCs based on the measurement results.

Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section according to the present invention.

The decision section 405 makes retransmission control decisions (ACKs/NACKs) based on the decoding results in the receiving process section 404, and, furthermore, outputs the results to the control section 401. For the decision section 405, a decision maker, a decision making circuit or a decision making device that can be described based on common understanding of the technical field to which the present invention pertains can be used.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes. Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2015-076144, filed on April 2, 2015, including the specification, drawings and abstract, is incorporated herein by reference in its entirety.

## Claims

1. A user terminal that communicates with a radio base station by using a first CC (Component Carrier) and a second CC, the user terminal comprising:
a generating section that generates uplink control information based on DL signals transmitted from the radio base station;
a transmission section that transmits uplink control information; and
a control section that controls transmission of the uplink control information,
wherein, when transmission of an uplink shared channel is indicated in the first CC, the control section controls the transmission of the uplink control information by using the uplink shared channel of the first CC, and, when transmission of an uplink shared channel is indicated in the second CC and the transmission of the uplink shared channel is not indicated in the first CC, the control section controls the transmission of the uplink control information by using an uplink control channel of the first CC.

2. The user terminal according to claim 1, wherein, when the transmission of the uplink shared channel is indicated in the second CC and the transmission of the uplink shared channel is not indicated in the first CC, the control section controls the transmission of the uplink control information by applying simultaneous transmission of an uplink control channel and an uplink shared channel.

3. The user terminal according to claim 1, wherein, when the transmission of the uplink shared channel is indicated in the second CC and the transmission of the uplink shared channel is not indicated in the first CC, the control section drops the transmission of the uplink shared channel in the second CC.

4. The user terminal according to one of claim 1 to claim 3, wherein, when the transmission of the uplink shared channel is indicated in the first CC, the control section does not apply the simultaneous transmission of the uplink control channel and the uplink shared channel.

5. The user terminal according to one of claim 2, wherein the transmission section reports, to the radio base station, capability information regarding whether or not the simultaneous transmission of the uplink control channel and the uplink shared channel is applied.

6. The user terminal according to one of claim 1 to claim 5, wherein the first CC uses a licensed band and the second CC uses an unlicensed band.

7. The user terminal according to claim 1, wherein, when a plurality of first CCs that use licensed bands are configured and transmission of an uplink shared channel is indicated in a predetermined CC among the plurality of CCs, the control section controls the transmission of the uplink control information by using the uplink shared channel of the predetermined licensed band CC.

8. The user terminal according to one of claim 1 to claim 7, wherein the control section controls the transmission of the uplink control information for each of plurality of cell groups, each cell group including at least one CC that uses the first CC and/or the second CC.

9. A radio base station that communicates with a user terminal by using a first CC (Component Carrier) and a second CC, the radio base station comprising:
a transmission section that transmits DL signals; and
a receiving section that receives uplink control information transmitted from the user terminal,
wherein, when transmission of an uplink shared channel is indicated in the first CC, the receiving section receives the uplink control information by using the uplink shared channel of the first CC, and, when transmission of an uplink shared channel is indicated in the second CC and the transmission of the uplink shared channel is not indicated in the first CC, the receiving section receives the uplink control information by using an uplink control channel of the first CC.

10. A radio communication method for a user terminal that communicates with a radio base station by using a first CC (Component Carrier) and a second CC, the radio communication method comprising the steps of:
generating uplink control information based on DL signals transmitted from the radio base station; and
transmitting uplink control information,
wherein, when transmission of an uplink shared channel is indicated in the first CC, the uplink control information is transmitted by using the uplink shared channel of the first CC, and, when transmission of an uplink shared channel is indicated in the second CC and the transmission of the uplink shared channel is not indicated in the first CC, the uplink control information is transmitted by using an uplink control channel of the second CC.
